# NEW EUROPEAN PATENT SPECIFICATION

(11) **EP 1 452 437 B2**
(45) Date of publication and mention of the opposition decision: **17.06.2009**
(45) Mention of the grant of the patent: 31.08.2005
(21) Application number: 03004518.1
(22) Date of filing: 28.02.2003
(51) Int. Cl.: B62M 11/16

(54) **An internal hub transmission for a bicycle**
Antriebsnabe für ein Fahrrad
Moyeu d'entraînement pour bicyclette

(43) Date of publication of application: 01.09.2004
(73) Proprietor: SHIMANO INC., Osaka 590-8577 (JP)
(72) Inventor: Itou, Minoru, Toyoura-gun, Yamaguchi 750-0321 (JP); Hino, Tetsuya, Shimonoseki-city, Yamaguchi 750-1137 (JP)
(74) Representative: Wallinger, Michael

(56) References cited:
- EP- - 0 693 419
- EP-A- 0 803 430
- EP-A- 0 803 431
- EP-A- 0 876 953
- DE- - 1 097 304
- DE- - 10 134 842
- DE- - 832 831 8.8
- GB- - 2 166 503
- GB-A- 190 703 414
- GB-A- 190 717 726
- US- - 3 366 206
- US- - 3 432 013
- US- - 3 492 883
- US- - 4 674 617

## Description

The present invention relates to a hub transmission for a bicycle, also referred to as an internal hub transmission. More particularly, the hub transmission comprises a movable clutch member which is actuated to select the gear speed.

Internal hub transmissions generally comprise a hub axle fixed to a bicycle frame and a hub body rotatable about the hub axle. A planetary gear mechanism is housed within the hub body by which rotational drive force can be communicated to the hub body through various transmission paths defined by the planetary gear mechanism. A clutch mechanism including a clutch member is provided for selecting the transmission path by selected axial movement of the clutch member, for example by a push rod.

A hub transmission of the above type is disclosed in the European patent application EP 0 876 953, where additional means are provided for facilitating actuation of the clutch member.

In this conventional hub transmission, the drive member is always in engagement with the clutch member regardless of the gear speed engaged, for example high speed, medium speed or low speed. Thus when backpedaling, the backward rotation of the drive member is always accompanied with backward rotation of the clutch member. Furthermore, when the high speed gear is selected, not only the clutch member but also the planetary gear carrier is also rotated backwardly when back pedaling is performed. Thus, when the clutch member and in some cases parts of the planetary gear mechanism are also rotated backwardly, reverse rotation is not smooth and somewhat heavy.

An object of the present invention is therefore to provide an improved hub transmission, which allows a smooth and light reverse running of the drive member and therefore of the transmission when back pedaling. A further object is to provide a hub transmission with internal gear changing means, where additionally external speed changing is allowed through chain shifting.

According to the present invention, a hub transmission is provided as defined in claim 1. A drive member is provided to be rotatably mounted around a hub axle. A hub body is also mounted to rotate about the hub axle, where a planetary gear mechanism is provided for communicating forward rotational force from the drive member to the hub body through various force transmission paths. The planetary gear mechanism includes a planet gear supported by a planet gear carrier for rotation around the hub axle, a ring gear engaging the planet gear and a sun gear disposed on the hub axle. A clutch member is provided to be movable in axial direction of the axle. Furthermore, a pawl body is arranged between the drive member and the clutch member. A first one-way clutch is arranged to transmit forward rotational drive force from the drive member to the pawl body.

With this arrangement, the drive member always engages the clutch member through the first one-way clutch to transmit forward rotational motion to the clutch member in any one of the selected gear speeds. On the other hand, the first one-way clutch decouples the drive member from the clutch member when reverse rotational motion is applied to the drive member through back pedaling. This is advantageously achieved according to the present invention by providing a pawl body between the drive member and the clutch member, where the first one-way clutch is preferably arranged on the pawl body. Consequently, the drive member runs smoothly and lightly when back pedaling because the internal components of the hub transmission are substantially decoupled from the drive member. A smooth backward running of the hub transmission can therefore be achieved which is nearly as light as for example a free hub commonly used with a derailleur.

In one embodiment, the clutch member is provided with teeth or a spline on an outer periphery, which is arranged to be slidably engageable with serrations on an inner periphery of the pawl body. In this manner, the clutch member maintains its connection to the pawl body regardless of the axial position of the clutch member.

In a further embodiment, the first one-way clutch comprises at least one pawl mounted on an outer periphery of the pawl body, where complementary ratchet teeth are formed on an inner periphery of the drive member. Preferably, the at least one pawl is pivotally mounted and spring biased so as to engage with the ratchet teeth when forward rotational drive force is applied to the drive member. The ratchet teeth are arranged to disengage from the at least one pawl when reverse rotational drive force is applied to the drive member. Thus, the free reverse rotation of the drive member can be accomplished with relatively simple construction of the pawl body and the associated first one-way clutch.

In a further embodiment, a second one-way clutch is arranged between the pawl body and the ring gear of the planetary gear mechanism for transmitting only forward rotational force to the ring gear. Preferably, the second one-way clutch comprises at least two pawls pivotally mounted on an outer periphery of the pawl body. These pawls are preferably spring biased to engage with complementary ratchet teeth formed on an inner periphery of the ring gear. The arrangement allows a constructively convenient transmission of forward rotational drive force from the drive member through the pawl body to the ring gear, while at the same time reverse rotational drive force is not transmitted to the ring gear.

In another embodiment, a third one-way clutch is provided between the ring gear and the hub body, the third one-way clutch being switchable between a power transmission state in which the third one-way clutch engages ratchet teeth of the hub body and a power interruption state in which the third one-way clutch disengages from the ratchet teeth of the hub body. Preferably, the clutch member comprises a switching portion for switching the third one-way clutch between the power transmission state and power interruption state depending on the axial position of the clutch member.

In a further preferred embodiment, the clutch member is also engageable with the planet gear carrier for defining a transmission path through the clutch member to the planet gear carrier for the high speed transmission path. Preferably, the end of the clutch member opposing the drive member is provided with engaging teeth for engagement with serration teeth on a periphery of the planet gear carrier.

Finally, in a very preferred embodiment, the outer periphery of the drive member is adapted for mounting at least one sprocket. Preferably, the outer periphery has an axial extension so as to allow mounting of several chain sprockets. In this embodiment, the present hub transmission can be employed in a combination where a drive chain is shifted from one sprocket to another sprocket to provide an external speed change. Also, gear speed change can be undertaken internally in the present hub transmission. Such a combination with a multi-stage sprocket assembly leads to a very versatile speed change apparatus for a bicycle.

Further advantages of the present invention will become apparent in the following description of embodiments taken in conjunction with the drawings.

Fig. 1 shows an embodiment of the present hub transmission with the clutch member engaged to select the high speed transmission path.

Fig. 2 shows the embodiment of Fig. 1, where the clutch member is axially positioned for engagement of the normal speed transmission path.

Fig. 3 shows the embodiment of Fig. 1, where the clutch member is axially positioned for engagement of the low speed transmission path.

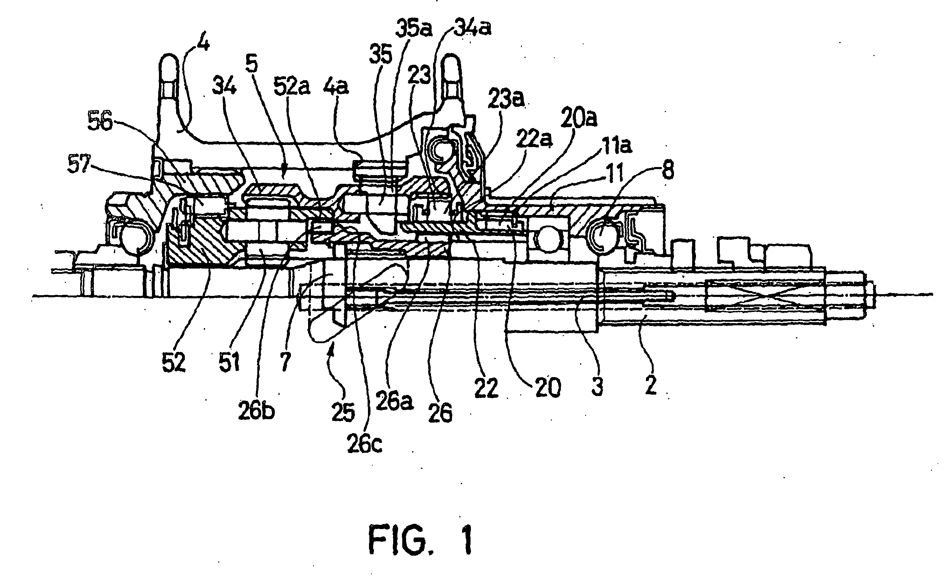

With reference to Fig. 1, an embodiment of the hub transmission is shown with a hub axle 2 adapted to be fixed to the rear drop-out (not shown) of the frame body of a bicycle. A drive member 11 is disposed around and rotatably mounted on the outer periphery at one end of the hub axle 2. A hub body 4 is rotatably mounted to the hub axle 2 and a planetary gear mechanism 5 is housed in the hub body 4. A clutch control mechanism 25 provides means for selecting the power transmission path through axial adjustment of the clutch member 26.

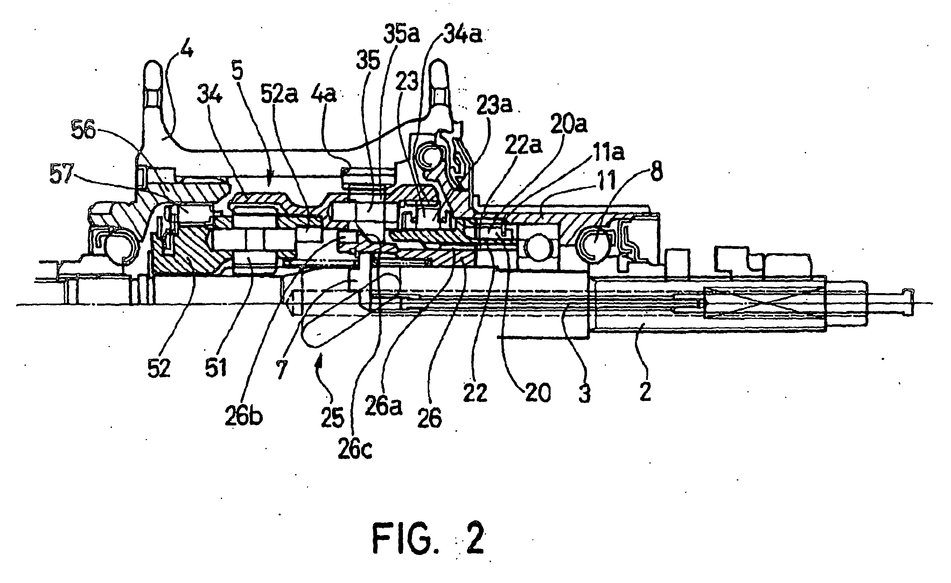

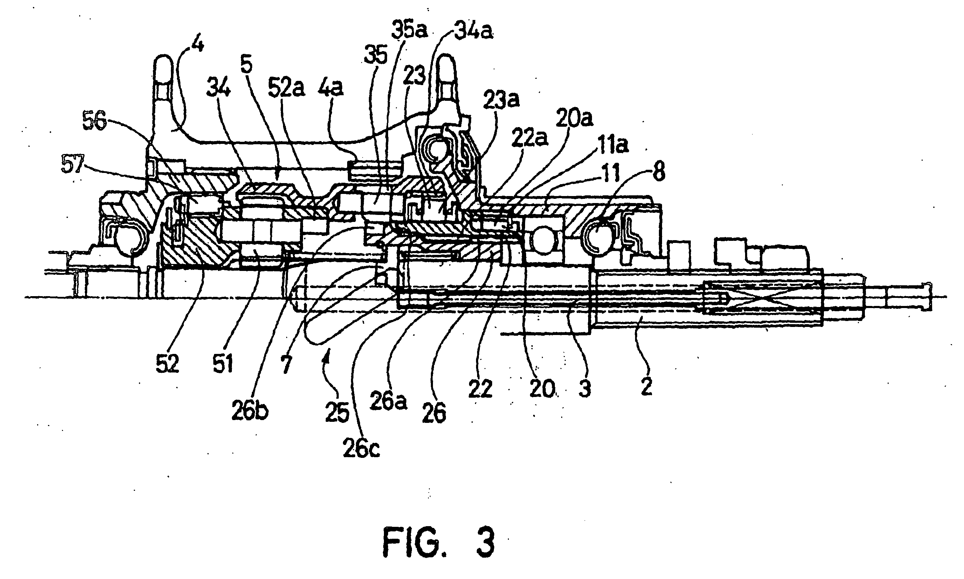

As shown in Fig. 1 as well as in Figs. 2 and 3, the hub axle 2 is a cylinder member with a larger diameter at its center and a smaller diameter at both ends. The center of the axle 2 is provided with a bore for disposition of a control rod 3. The control rod 3 is activated at the right end in Fig. 1 through actuator means controlled by a shift control cable (not shown). Axial movement of the control rod 3 is transmitted through the shift key 7, which extends through an axial groove of the hub axle. The shift key 7 engages with the clutch member 26, whereby the axial positioning of the clutch member 26 for selection of the force transmission path is accomplished.

The drive member 11 is rotatably supported on the hub axle 2 by means of a ball bearing assembly 8. The hub body 4 is also mounted in ball bearing assemblies for rotation about the hub axle 2 and includes radially outward extending flanges for supporting spokes (not shown) for fixation to a bicycle wheel.

The planetary gear mechanism 5 comprises a sun gear formed on the hub axle, a planet gear carrier 52 rotatably mounted on the outer periphery of the hub axle 2, and normally three planet gears 51 (only one planet gear is shown in Fig. 1). The planet gears mesh with the sun gear as well as with an inner periphery of a ring gear 34. In addition, the planet gear carrier 52 is provided with serration teeth 52a formed on a periphery, preferably an inner periphery, of the planet gear carrier 52 at an end facing the drive member 11. The serration teeth 52a are provided for engagement with corresponding engaging serration teeth 26b of the clutch member 26, as will be discussed below.

Again referring to Fig. 1, a first one-way clutch 20 is arranged between the drive member 11 and a pawl body 22. The first one-way clutch comprises at least one pawl 20a mounted on an outer periphery of the pawl body 22. One pawl is sufficient for rotational force transmission, however two or more pawls may be provided if desired. The pawls 20a are pivotally mounted on an outer periphery of the pawl body 22 and are spring biased so as to engage with ratchet teeth 11a on an inner periphery of the drive member 11. The ratchet teeth 11a are formed in a manner that forward rotational drive force applied to the drive member 11 is transferred to the pawl body 22, whereas the pawls 20a disengage from the ratchet teeth 11a when reverse rotational force is present on the drive member, for example when back pedaling.

As can be seen in Figs. 1, 2 and 3, the axial position of the pawl body 22 with respect to the drive member 11 remains unchanged for the high speed, normal speed and low speed positions for the hub transmission. In other words, no relative axial movement takes place between the drive member 11 and the pawl body 22.

As a consequence of this arrangement, only forward rotational drive force is transferred from the drive member 11 to the internal elements of the hub transmission, whereas when the drive member is rotated reversely, no or at least substantially no reverse rotational drive force is transmitted. In this manner, an extremely smooth and light running condition is achieved when back pedaling with the present hub transmission. Only the drive member itself runs in reverse, while the clutch member is decoupled from the drive member 11 by means of the one-way clutch 20. In particular in the high speed condition shown in Fig. 1, not only the clutch member is decoupled from the drive member but also the planet gear carrier 51 which is engaged with the clutch member 26. This light running of the drive member is of importance when several chain sprockets are mounted externally on the drive member.

In the present embodiment, a second one-way clutch 23 is arranged between the pawl body 22 and the ring gear 34 as is seen in Fig. 1. The second one-way clutch 23 comprises at least two pawls 23a which are pivotally mounted on an outer periphery of the pawl body 22. The pawls 23a are spring biased to engage with ratchet teeth 34a formed on an inner periphery of the ring gear 34. In this embodiment, two pawls 23a are employed, while in practice four pawls or more may be provided depending on the situation, i.e. depending on the force to be transferred.

As can be seen in Figs. 1, 2 and 3, the ring gear 34 remains fixed in axial direction, while being rotatably mounted about the axle 2. The ring gear 34 extends from a position of the planet gears 51 at one end (left side in Fig. 1) to a position adjacent to the drive member 11 at the other end. At the one end of the ring gear 34, inner peripheral teeth are provided which mesh with the planet gears 51. The ring gear 34 is also provided with a third one-way clutch 35 which comprises at least one clutch pawl 35a, which is biased in the standing or erected position by a coil spring. The clutch pawl or pawls 35a engage with ratchet teeth 4a on an inner periphery of the hub body 4. The clutch pawl 35a meshes with the ratchet teeth 4a when the ring gear is rotated in the forward drive direction. In this third one-way clutch however, the clutch pawl or pawls 35a can be placed in a power transmission state or a power interruption as will be discussed below. In the power transmission state, forward drive rotation is transferred from the ring gear to the pawl 35a and the ratchet teeth 4a to the hub body 4. In the power interruption state, the clutch pawl 35a is knocked down by a switching portion 26c of the clutch member 26 as shown in Fig. 3. In this power interruption state, no forward or reverse rotational drive force can be transmitted to the ratchet teeth 4a of the hub body.

The operation of the hub transmission will now be described according to the present embodiment with three forward speeds. It will however be apparent to the skilled person, that the arrangement of the present one-way clutch between the drive member 11 and the pawl body 22 can be provided in hub transmissions having any number of speeds.

Fig. 1 shows the high speed transmission path. Forward rotational force applied to the drive member 11 is transmitted through the one-way clutch 20 to the pawl body 22 which in turn transmits the force to the clutch member 26 via the serration teeth 26a. The clutch member 26 has been placed by the clutch control mechanism 25 in an axial position to the left in Fig. 1. In this position, the engaging serration teeth 26b of the clutch member engage with the serration teeth 52a on the planet gear carrier 52. Rotation is then transmitted from the planet gear carrier 52 via the planet gear mechanism 5 to the ring gear 34 and subsequently to the third one-way clutch 35 which is in the erected state, i.e. in the power transmission state. Finally, the one-way clutch 35 transfers the forward drive force to the hub body 4.

In this case, the input rotation is increased in speed and then output according to the gear ratio determined by the numbers of teeth on the sun gear, the planet gears 51 and the ring gear 34. In the condition shown in Fig. 1, forward rotation of the drive member 11 is also transmitted to the second one-way clutch 23, however the rotation of the ring gear 34 is faster than that of the drive member 11, so that no rotation is transmitted to the ring gear 34 via the second one-way clutch 23.

The normal speed operating condition is illustrated in Fig. 2. The clutch member 26 is positioned by means of the clutch control mechanism 25 to an intermediate axial position. Forward drive rotation from the drive member 11 is transmitted through the one-way clutch 20 to the pawl body 22 and then through the second one-way clutch 23 directly to the ring gear 34. The third one-way clutch 35 is still in the power transmission state so that the forward rotational drive force of the ring gear 34 is transmitted directly to the hub body 4. In this condition, the forward rotational drive force of the ring gear 34 is also transmitted to the planet gear carrier 52 via the planet gears 51 and from there to a roller 57 which engages the hub cap 56. The hub cap 56 is fixed to the hub body 4 and acts as a further transmission means of rotational force to the hub body 4. However, the rotational speed of the planet gear carrier 52 is reduced by the planet gears 51 so that rotational transmission through the roller 57 and the hub cap 56 is overrun by the faster rotational motion of the third one-way clutch 35.

Fig. 3 illustrates the low-speed transmission path, where the clutch member 26 is now positioned axially to the right hand side in the direction of the drive member 11. In this position, a switching portion 26c of the clutch member 26 has engaged with the clutch pawls 35a to place them in the knocked down state, i.e. the third one-way clutch 35 is in the power interruption state. The forward rotation of the drive member 11 is transmitted through the one-way clutch 20 to the pawl body 22 and from there through the second one-way clutch 23 to the ring gear 34. As mentioned, the one-way clutch 35 is knocked down, so that no rotation is transmitted to the hub body at this position. The forward rotation of the ring gear is then transmitted through the planet gear mechanism 5 to the planet gear carrier 52 and from there through the roller 57 and the hub cap 56 to the hub body 4. The rotation speed of the ring gear 34 is reduced by the planet gears 51 resulting in the low speed transmission condition.

A particular advantage of the present invention is that the outer periphery of the drive member 11, for example as shown in Fig. 1, can be provided with an axial extension to allow several chain sprockets (not shown) to be secured to the outer periphery. Thus it is possible for example to mount several sprockets to the drive member 11 and to provide chain shifting means, which would allow changing speeds by shifting the chain from one sprocket to another.

An advantageous application of the present hub transmission is then a combination of the present hub transmission with multi-stage sprocket assembly mounted to the drive member 11 to form a combined speed changing apparatus for a bicycle. The present hub transmission is advantageously adapted for such an apparatus, since the provision of the pawl body 22 and the first one-way clutch 20 allow a smooth and light running of the drive member 11, especially in reverse rotation. In such an apparatus, the smooth running of the present drive member 11 would be comparable to that normally achieved in a freewheel arrangement commonly used in multi-stage sprocket assemblies.

## Claims

1. An internal hub transmission for a bicycle comprising:
a drive member (11) rotatably mounted around a hub axle (2);
a hub body (1) rotatably mounted around the hub axle (2);
a planetary gear mechanism (5) coupled for communicating rotational force from the drive member (11) to the hub body (4) through various force transmission paths, said planetary gear mechanism (5) including a planet gear (51) supported by a planet gear carrier (52) for rotation around the hub axle (2) and a ring gear (34) engaging the planet gear (51);
a clutch member (26) movable in axial direction (X) of the axle (2); **characterized in that,**
a pawl body (22) is arranged between the drive member (11) and the clutch member (26), and
a first one-way clutch (20) is arranged to transmit forward rotational drive force from the drive member (11) to the pawl body (22),
wherein the drive member (11) always engages the clutch member (26) through the first one-way clutch (20) to transmit forward rotational motion to the clutch member (26) in any one of the selected gear speeds,
and wherein the first one-way clutch (20) decouples the drive member (11) from the clutch member (26) when reverse rotational motion is applied to the drive member (11) through back pedaling.

2. The internal hub transmission according to claim 1, wherein the clutch member (26) is provided, at an end towards the drive member (11), with serration teeth (26a) on an outer periphery thereof, so as to be slidably engageable with serration teeth (22a) on an inner periphery of the pawl body (22).

3. The internal hub transmission according to claim 1 or 2, wherein the first one-way clutch (20) comprises at least one pawl (20a) mounted on an outer periphery of said pawl body (22) and ratchet teeth (11a) formed on an inner periphery of the drive member (11).

4. The internal hub transmission according to claim 3, wherein said at least one pawl (20a) is pivotally mounted and spring-biased so as to engage with said ratchet teeth (11a) when forward rotational drive force is applied to said drive member (11) and so as to disengage from said ratchet teeth (11a) when reverse rotational drive force is applied to said drive member (11).

5. The internal hub transmission according to any one of the claims 1 to 4, wherein a second one-way clutch (23) is arranged between said pawl body (22) and said ring gear (34) for transmitting only forward rotational drive force from said pawl body (22) to said ring gear (34).

6. The internal hub transmission according to claim 5, wherein said second one-way clutch (23) comprises at least two pawls (23a) pivotally mounted on an outer periphery of said pawl body (22), said at least two pawls (23a) being spring-biased to engage ratchet teeth (34a) formed on an inner periphery of said ring gear (34).

7. The internal hub transmission according to any one of the claims 1 to 6, wherein a third one-way clutch (35) is arranged between said ring gear (34) and said hub body (4), said third one-way clutch (35) comprising at least one clutch pawl (35a) pivotally mounted on said ring gear (34) and ratchet teeth (4a) provided on an inner periphery of said hub body (4).

8. The internal hub transmission according to claim 7, wherein said at least one clutch pawl (35a) is switchable between a power transmission state in which said at least one clutch pawl (35a) is erected and engages said ratchet teeth (4a) of said hub body (4) for forward rotational force transmission and a power interruption state in which said at least one clutch pawl (35a) is knocked down and does not engage said ratchet teeth (4a) of the hub body (4).

9. The internal hub transmission according to claim 8, wherein said clutch member (26) comprises a switching portion (26c) for switching said at least one clutch pawl (35a) between said power transmission state and said power interruption state depending on the axial position of the clutch member (26) on the hub axle (2).

10. The internal hub transmission according to any one of the claims 1 to 9, wherein said clutch member (26) is provided, at an end opposing said drive member (11), with engaging serration teeth (26b) for engagement with serration teeth (52a) located on a periphery of the planet gear carrier (52).

11. The internal hub transmission according to any one of the claims 1 to 10, wherein the outer periphery of the drive member (11) is adapted for mounting at least one sprocket.

12. A speed changing apparatus for a bicycle comprising the hub transmission of any one of the claims 1 to 11 with a multi-stage sprocket assembly mounted at an outer periphery of the drive member (11).

## Patentansprüche

1. Antriebsnabe für ein Fahrrad, umfassend:
ein in bezug auf die Nabenachse (2) drehbar montiertes Antriebselement (11);
ein in bezug auf die Nabenachse (2) drehbar montiertes Nabengehäuse (4);
ein angekoppeltes Planetengetriebe (5), um Drehkraft vom Antriebselement (11) über verschiedenen Kraftübertragungspfade auf das Planetengetriebe (5) aufweist: ein Planetenrad (51), welches zur Rotation um die Nabenachse (2) auf einem Planetenradträger (52) abgestützt ist, und ein in das Planetenrad (51) eingreifendes Tellerrad (34);
ein in Axialrichtung (X) der Achse (2) bewegliches Kupplungselement (26);
**dadurch gekennzeichnet, dass**
zwischen dem Antriebselement (11) und dem Kupplungselement (26) ein Klingenkörper (22) angeordnet ist, und
eine erste Einwegkupplung (20) angeordnet ist, um Vorwärtsdrehkraft von dem Antriebselement (11) auf den Klinkenkörper (22) zu übertragen,
wobei das Antriebselement (11) durch die erste Einwegkupplung (20) immer in das Kupplungselement (26) eingreift, um eine Vorwärtsdrehbewegung auf das Kupplungselement (26) in jedem gewählten Gang, zu übertragen,
und wobei die erste Einwegkupplung (20) das Antriebselement (11) von dem Kupplungselement (26) auskuppelt, wenn eine Rückwärtsdrehbewegung, durch Rückwärtstreten, an das Antriebselement (11) angelegt wird.

2. Antriebsnabe gemäß Anspruch 1, wobei das Kupplungselement (26) an einem Ende in Richtung zu dem Antriebselement (11) eine Kerbverzahnung (26a) an einem Außenumfang zum gleitenden Eingriff in die Kerbverzahnung (22a) an einem Innenumfang des Klinkenkörpers (22) aufweist.

3. Antriebsnabe gemäß Anspruch 1 oder 2, wobei die erste Einwegkupplung (20) wenigstens eine an einen Außenumfang des Klinkenkörpers (22) montierte Sperrklinke (20a) und Rastzähne (11a), die an einem Innenumfang des Antriebselements (11) ausgebildet sind, aufweist.

4. Antriebsnabe gemäß Anspruch 3, wobei die wenigstens eine Sperrklinke (20a) schwenkbar gelagert und federbelastet ist, so dass sie in die Rastzähne (11a) eingreift, wenn Vorwärtsdrehkraft auf das Antriebselement (11) aufgebracht wird, und aus den Rastzähnen (11a) ausrückt, wenn Rückwärtsdrehkraft auf das Antriebselement (11) aufgebracht wird.

5. Antriebsnabe gemäß einem der Ansprüche 1 bis 4, wobei zwischen dem Klinkenkörper (22) und dem Tellerrad (34) eine zweite Einwegkupplung (23) angeordnet ist, welche nur Vorwärtsdrehkraft von dem Klinkenkörper (22) auf das Tellerrad (34) überträgt.

6. Antriebsnabe gemäß Anspruch 5, wobei die zweite Einwegkupplung (23) wenigstens zwei schwenkbar an einem Außenumfang des Klinkenkörpers (22) montierte Sperrklinken (23a) aufweist, wobei die wenigstens zwei Sperrklinken (23a) federbelastet sind, um in Rastzähne (34a) einzugreifen, welche an einem Innenumfang des Tellerrads (34) ausgebildet sind.

7. Antriebsnabe gemäß einem der Ansprüche 1 bis 6, wobei zwischen dem Tellerrad (34) und dem Nabengehäuse (4) eine dritte Einwegkupplung (35) angeordnet ist, wobei die Dritte Einwegkupplung (35) wenigstens eine schwenkbar auf dem Tellerrad (34) montierte Kupplungsklinke (35a) und an einem Innenumfang des Nabengehäuses (4) vorgesehene Rastzähne (4a) aufweist.

8. Antriebsnabe gemäß Anspruch 7, wobei die wenigstens eine Kupplungsklinke (35a) umschaltbar ist zwischen einem Kraftübertragungszustand, in welchem die wenigstens eine Kupplungsklinke (25a) aufgerichtet ist und in die Rastzähne (4a) des Nabengehäuses (4) eingreift, um Vorwärtsdrehkraft zu übertragen, und einem Kraftunterbrechungszustand, in welchem die wenigstens eine Kupplungsklinke (35a) heruntergedrückt ist und nicht in die Rastzähne (4a) des Nabengehäuses (4) eingreift.

9. Antriebsnabe gemäß Anspruch 8, wobei das Kupplungselement (26) einen Umschaltabschnitt (26c) aufweist zum Umschalten der wenigstens einen Kupplungsklinke (35a) zwischen dem Kraftübertragungszustand und dem Kraftunterbrechungszustand in Abhängigkeit von der axialen Position des Kupplungselements (26) auf der Nabenachse (2).

10. Antriebsnabe gemäß wenigstens einem der Ansprüche 1 bis 9, wobei das Kupplungselement (26) an einem Ende gegenüber dem Antriebselement (11) eine Eingriffskerbverzahnung (26b) zum Eingriff mit der Kerbverzahnung (52a), welche an einem Umfang des Planetenradträgers (52) angeordnet ist, aufweist.

11. Antriebsnabe gemäß einem der Ansprüche 1 bis 10, wobei der Außenumfang des Antriebselements (11) zur Befestigung wenigstens eines Kettenrades ausgelegt ist.

12. Gangschaltung für ein Fahrrad, umfassend die Antriebsnabe gemäß einem der Ansprüche 1 bis 11 mit einer an einen Außenumfang des Antriebselements (11) montierten Mehrfachkettenradanordnung.

## Revendications

1. Transmission à moyeu interne pour bicyclette comprenant :
un élément d'entraînement (11) monté de manière rotative autour d'un essieu (2) de moyeu ;
un corps de moyeu (4) monté de manière rotative autour de l'essieu (2) de moyeu ;
un mécanisme d'engrenages planétaires (5) couplé pour communiquer la force de rotation de l'élément d'entraînement (11) au corps de moyeu (4) par différents passages de transmission de force, ledit mécanisme d'engrenages planétaires (5) comprenant une roue planétaire (51) supportée par un support de roue planétaire (52) pour la rotation autour de l'essieu (2) de moyeu et une couronne (34) mettant en prise la roue planétaire (51) ;
un élément d'embrayage (26) mobile dans la direction axiale (X) de l'essieu (2) ;
**caractérisée en ce que :**
un corps de cliquet (22) est agencé entre l'élément d'entraînement (11) et l'élément d'embrayage (26), et
une première roue libre (20) est agencée pour transmettre la force d'entraînement rotationnelle avant de l'élément d'entraînement (11) au corps de cliquet (22),
où l'élément d'entraînement (11) met toujours en prise l'élément d'embrayage (26) via la première roue libre (20) pour transmettre un mouvement rotationnel avant à l'élément d'embrayage (26) dans l'une quelconque des vitesses de développement choisies, et où la première roue libre (20) découple l'élément d'entraînement (11) de l'élément d'embrayage (26) quand un mouvement rotationnel inverse est appliqué à l'élément d'entraînement (11) par rétropédalage.

2. Transmission à moyeu interne selon la revendication 1, dans laquelle l'élément d'embrayage (26) est prévu, au niveau d'une extrémité vers l'élément d'entraînement (11), avec des dents dentelées (26a) sur sa périphérie externe, afin de pouvoir se mettre en prise de manière coulissante avec les dents dentelées (22a) sur une périphérie interne du corps de cliquet (22).

3. Transmission à moyeu interne selon la revendication 1 ou 2, dans laquelle la première roue libre (20) comprend au moins un cliquet (20a) monté sur une périphérie externe dudit corps de cliquet (22) et des dents triangulaires (11a) formées sur une périphérie interne de l'élément d'entraînement (11).

4. Transmission à moyeu interne selon la revendication 3, dans laquelle ledit au moins un cliquet (20a) est monté de manière pivotante et sollicité par ressort afin de se mettre en prise avec lesdites dents triangulaires (11a) lorsque la force d'entraînement rotationnelle avant est appliquée sur ledit élément d'entraînement (11) et afin de se dégager desdites dents triangulaires (11a) lorsque la force d'entraînement rotationnelle inverse est appliquée sur ledit élément d'entraînement (11).

5. Transmission à moyeu interne selon l'une quelconque des revendications 1 à 4, dans laquelle une seconde roue libre (23) est agencée entre ledit corps de cliquet (22) et ladite couronne (34) pour ne transmettre que la force d'entraînement rotationnelle avant dudit corps de cliquet (22) à ladite couronne (34).

6. Transmission à moyeu interne selon la revendication 5, dans laquelle ladite seconde roue libre (23) comprend au moins deux cliquets (23a) montés de manière pivotante sur une périphérie externe dudit corps de cliquet (22), lesdits au moins deux cliquets (23a) étant sollicités par ressort pour mettre en prise les dents triangulaires (34a) formées sur une périphérie interne de ladite couronne (34).

7. Transmission à moyeu interne selon l'une quelconque des revendications 1 à 6, dans laquelle une troisième roue libre (35) est agencée entre ladite couronne (34) et ledit corps de moyeu (4), ladite troisième roue libre (35) comprenant au moins un cliquet (35a) d'embrayage monté de manière pivotante sur ladite couronne (34) et des dents triangulaires (4a) prévues sur une périphérie interne dudit corps de moyeu (4).

8. Transmission à moyeu interne selon la revendication 7, dans laquelle ledit au moins un cliquet (35a) d'embrayage est commutable entre un état de transmission de puissance dans lequel ledit au moins un cliquet (35a) d'embrayage est vertical et se met en prise avec lesdites dents triangulaires (4a) dudit corps de moyeu (4) pour la transmission de la force rotationnelle avant et un état d'interruption de puissance dans lequel ledit au moins un cliquet (35a) d'embrayage est renversé et ne se met pas en prise avec lesdites dents triangulaires (4a) du corps de moyeu (4).

9. Transmission à moyeu interne selon la revendication 8, dans laquelle ledit élément d'embrayage (26) comprend une partie de commutation (26c) pour commuter ledit au moins un cliquet (35a) d'embrayage entre ledit état de transmission de puissance et ledit état d'interruption de puissance en fonction de la position axiale de l'élément d'embrayage (26) sur l'essieu (2) du moyeu.

10. Transmission à moyeu interne selon l'une quelconque des revendications 1 à 9, dans laquelle ledit élément d'embrayage (26) est prévu, au niveau d'une extrémité opposée audit élément d'entraînement (11), avec des dents dentelées de mise en prise (26b) pour la mise en prise avec des dents dentelées (52a) situées sur une périphérie du support de roue planétaire (52).

11. Transmission à moyeu interne selon l'une quelconque des revendications 1 à 10, dans laquelle la périphérie externe de l'élément d'entraînement (11) est adaptée pour le montage d'au moins un pignon.

12. Dispositif de changement de vitesse pour bicyclette comprenant la transmission à moyeu selon l'une quelconque des revendication 1 à 11 avec un ensemble de pignons à plusieurs étages monté au niveau d'une périphérie externe de l'élément d'entraînement (11).
